# EUROPÄISCHE PATENTSCHRIFT

(11) **EP 3 625 835 B1**
(45) Veröffentlichungstag und Bekanntmachung des Hinweises auf die Patenterteilung: **20.12.2023**
(21) Anmeldenummer: 17724058.7
(22) Anmeldetag: 18.05.2017
(51) Int. Cl.: B60L 50/60, H01M 50/271, H01M 50/236, H01M 50/224, H01M 50/24, B60L 50/64

(54) **BATTERIEGEHÄUSE**
BATTERY HOUSING
BOÎTIER D'ACCUMULATEUR

(43) Veröffentlichungstag der Anmeldung: 25.03.2020
(73) Patentinhaber: ThyssenKrupp Steel Europe AG, 47166 Duisburg (DE); thyssenkrupp AG, 45143 Essen (DE)
(72) Erfinder: KIBBEN, Martin, 46537 Dinslaken (DE); HILFRICH, Erik, 40470 Düsseldorf (DE); SCHIRMER, Matthias, 40227 Düsseldorf (DE)
(74) Vertreter: ThyssenKrupp Steel Europe AG
(86) Internationale Anmeldenummer: PCT/EP2017/061945
(87) Internationale Veröffentlichungsnummer: WO 2018/210420

(56) Entgegenhaltungen:
- EP-A1- 0 732 759
- EP-A1- 2 945 204
- EP-A1- 3 026 730
- WO-A1-2017/207125

## Beschreibung

### Technisches Gebiet

Die vorliegende Erfindung betrifft ein Batteriegehäuse für ein elektrisch angetriebenes Fahrzeug, insbesondere für ein Kraftfahrzeug sowie ein elektrisch angetriebenes Fahrzeug, insbesondere ein Kraftfahrzeug aufweisend das erfindungsgemäße Batteriegehäuse.

### Technischer Hintergrund

Die anhaltende Elektrifizierung des Automobils und der Wunsch nach hohen Reichweiten solcher Fahrzeuge erfordern die Entwicklung leistungsfähiger Batteriekonzepte, an die komplexe Anforderungen hinsichtlich Gewicht, Stabilität sowie Bauraum für die Aufnahme der Batteriemodule gestellt werden. Auch weitere Aspekte wie die Kühlung, Korrosionsschutz und die Montage müssen entsprechend berücksichtigt werden. Schließlich ist es wünschenswert, dass das Batteriegehäuse einfach und kostengünstig herstellbar ist.

Der Bauraum der Crashverstärkungsbauteile konkurriert dabei mit dem Bauraum der Batteriemodule und dem Bauraum der Kühlung. Vorteilhafte Lösungen liefern einen hohen Schutz gegen einen potentiellen Aufprall ohne den Bauraum der anderen Komponenten zu beanspruchen.

Bei einer aus Tiefziehteilen basierenden Bauweise besteht die Herausforderung in dem Umformen der höchstfesten Werkstoffe. Bei aus dem Stand der Technik bekannten Tiefziehteilen werden die Ecken mit großen Radien versehen, was die Bauraumausnutzung verschlechtert. Bei warm umformbaren Bauteilen verbessert sich die Umformsituation, allerdings sind auch hier Radien in den Ecken notwendig.

Bei einer auf Profilen basierenden Bauweise hat man zwar eine bessere Bauraumausnutzung, allerdings weisen die entsprechenden Gehäuse viele Fügestellen auf, die hinsichtlich Dichtigkeit, Schweißverzug und Toleranzen anspruchsvoll.

Ein gattungsgemäßes Batteriegehäuse ist in der EP 2 945 204 A1 offenbart.

### Zusammenfassung der Erfindung

Der Erfindung liegt somit die Aufgabe zu Grunde, ein gegenüber dem Stand der Technik verbessertes Batteriegehäuse bereitzustellen.

Gelöst wird diese Aufgabe durch ein Batteriegehäuse mit den Merkmalen des Patentanspruchs 1.

Vorteilhafte Ausgestaltungen und Varianten der Erfindung ergeben sich aus den abhängigen Ansprüchen und der nachfolgenden Beschreibung.

Erfindungsgemäß ist vorgesehen, dass das Batteriegehäuse für ein elektrisch angetriebenes Fahrzeug, insbesondere für ein elektrisch angetriebenes Kraftfahrzeug (E-Auto), einen Batterieaufnahmeraum aus einem ersten Stahlflachprodukt, wobei der Batterieaufnahmeraum in Form einer Wanne mit umlaufendem Flansch ausgebildet ist, und einen Gehäuserahmen aus einem zweiten Stahlflachprodukt aufweist, wobei beide Stahlflachprodukte sich in mindestens einer der Eigenschaften Dehngrenze (R_{p0,2}), Zugfestigkeit (R_{M}) oder Dehnung (A₅₀) unterscheiden.

Durch eine Kombination von zwei unterschiedlichen Stahlflachprodukten wird überraschenderweise ein Batteriegehäuse erhalten, das zum einen, einen hohen Crashdeformationswiderstand und zum anderen eine verbesserte Bauraumausnutzung aufweist.

Bevorzugt bestehen beide Stahlflachprodukte aus einem Q&P-Stahl. Ein Q&P Stahl zeichnet sich zum einen durch eine hohe Festigkeit (mindestens 1000 MPa, mehr bevorzugt 1200 MPa) aus und weist zum anderen - im Vergleich zu ähnlich festen Stählen - gute Verarbeitungseigenschaften auf.

Erfindungsgemäß weisen beide Stahlflachprodukte eine Zusammensetzung auf, die neben Eisen und unvermeidbaren Verunreinigung (in Gew.-%) 0,1 - 0,35 C, mehr bevorzugt 0,15 - 0,35 C; 0,5 - 1,8 Si, mehr bevorzugt 0,8 - 1,8 Si; 1,4 - 3,2 Mn; bis zu 1,0 Al, mehr bevorzugt bis zu 0,04 Al; bis zu 0,015 P; bis zu 0,0025 S; bis zu 0,0075 N; sowie optional ein bis vier Elemente ausgewählt aus der Gruppe Mo, V, Ti und/oder Nb, B und Cr in den Gehalten 0,1 - 0,5 Cr, mehr bevorzugt 0,2 - 0,35 Cr; 0,05 - 0,25 Mo, mehr bevorzugt 0,20 - 0,25 Mo; 0,05 - 0,15 V, mehr bevorzugt 0,06 - 0,07 V; 0,0005 bis 0,005 B; 0,005 - 0,135 Ti und/oder Nb enthält. Durch einen speziellen Prozess wird ein Gefüge in dem Stahl eingestellt, dass weniger als 30 %, mehr bevorzugt weniger als 5 % Ferrit, weniger als 10 % Bainit, 5 - 70 % unangelassenen Martensit, 5 - 30 % Restaustenit und 25 - 80 % angelassenen Martensit aufweist (in Flächen-%). Ferner weisen mindestens 99 % der im angelassenen Martensit enthaltenen Eisenkarbide eine Größe von weniger als 500 nm auf.

Vorzugsweise ist das erste Stahlflachprodukt derart gewählt, dass neben der hohen Festigkeit eine gute Umformbarkeit des Materials gegeben ist, so dass der Batterieaufnahmeraum eine Kombination aus hohem Crashdeformationswiderstand und einer guten Umformbarkeit aufweist.

Der Gehäuserahmen verläuft entlang des Randes des Batteriegehäuses und weist vorzugsweise einen rechteckigen oder fünfeckigen Querschnitt auf. Mit dem Gehäuserahmen kann das Batteriegehäuse mit der Karosserie des Fahrzeugs verbunden werden. Hierzu weist der Gehäuserahmen vorzugsweise Öffnungen auf, so dass es mit Schrauben an der Karosserie verschraubt werden kann. Alternativ kann der Gehäuserahmen auch form- oder stoffschlüssig mit der Karosserie verbunden werden. Entsprechende Techniken sind dem Fachmann bekannt.

Vorzugsweise ist der Gehäuserahmen aus einer hochfesten Variante des Q&P-Stahls ausgebildet, so dass der Gehäuserahmen einen wesentlichen Beitrag leistet, um Intrusionen bei seitlich einwirkenden Crashlasten zu verhindern.

Gemäß einer bevorzugten Variante ist der Gehäuserahmen aus mindestens 4 Profilelementen ausgebildet. Die Profilelemente können an den Ecken auf Gehrung oder auf Stoß verbunden sein.

Vorzugsweise weisen die Profilelemente innen angeordnete Verstärkungselemente auf, um im Crashfall ein Kollabieren des Gehäuserahmens zu verhindern. Die Verstärkungselemente sind innen angeordnete Schottbleche, Hutprofile oder mäanderförmige Profile. Vorzugsweise sind die Verstärkungselemente aus dem zweiten Stahlflachprodukt ausgebildet.

Erfindungsgemäß weist das erste Stahlflachprodukt eine Dehngrenze von mindestens 650 MPa, eine Zugfestigkeit von mindestens 1250 MPa und/oder eine Dehnung von mindestens 18 % und das zweite Stahlflachprodukt eine Dehngrenze von mindestens 1000 MPa, eine Zugfestigkeit von mindestens 1400 MPa und/oder eine Dehnung von mindestens 12 % auf.

In einer auf vorzugsweise tiefziehteilen basierenden Bauweise liegen die Batteriemodule bauraumoptimiert in der Wanne, da durch den Einsatz einer Q&P Variante mit guter Umformbarkeit kleinere Eckenradien realisiert werden können. Die Wanne kann gemäß einer bevorzugten Variante der vorliegenden Erfindung mittels eines passenden Deckels verschlossen werden. Vorzugsweise ist der Deckel ebenfalls als Tiefziehteil ausgeführt und weist einen umlaufenden Flansch auf, an dem die Verschraubung und/oder Verklebung sowie eine Abdichtung mit der Wanne erfolgt. Vorteil dieser Bauweise ist, dass keine Schweißnähte über den Dichtflansch laufen und in der Wanne nach Außen gehenden Spalten verschweißt werden - dadurch ist das Risiko von Undichtigkeiten stark reduziert.

Die Wanne ist vorzugsweise einteilig ausgebildet ist und weist einen unteren Radius Ru im Bereich von 5 -15 mm, vorzugsweise 5 - 12 mm, und/oder einen oberen Radius Ro im Bereich von 4 - 12 mm, vorzugsweise 4 -10 mm und/oder eine Ziehschräge α im Bereich von 2 - 6 °, vorzugsweise 2 - 5 ° auf.

So ist die Wanne in einem Ausführungsbeispiel vorzugsweise einteilig ausgebildet und weist einen unteren Radius Ru im Bereich von 5-15 mm, vorzugsweise 5 - 12 mm. In einem anderen Ausführungsbeispiel ist die Wanne vorzugsweise einteilig ausgebildet und weist einen oberen Radius Ro im Bereich von 4 -12 mm, vorzugsweise 4 -10 mm auf. In einem weiteren Ausführungsbeispiel ist die Wanne vorzugsweise einteilig ausgebildet und weist eine Ziehschräge α im Bereich von 2 - 6 °, vorzugsweise 2 - 5 ° auf. In einem weiteren Ausführungsbeispiel ist die Wanne vorzugsweise einteilig ausgebildet und weist einen unteren Radius Ru im Bereich von 5 -15 mm, vorzugsweise 5 - 12 mm, und einen oberen Radius Ro im Bereich von 4 - 12 mm, vorzugsweise 4 - 10 mm auf. In einem weiteren Ausführungsbeispiel ist die Wanne vorzugsweise einteilig ausgebildet und weist einen unteren Radius Ru im Bereich von 5 -15 mm, vorzugsweise 5 -12 mm und eine Ziehschräge α im Bereich von 2 - 6 °, vorzugsweise 2 - 5 ° auf. In einem weiteren Ausführungsbeispiel ist die Wanne vorzugsweise einteilig ausgebildet und weist einen oberen Radius Ro im Bereich von 4 - 12 mm, vorzugsweise 4 - 10 mm und eine Ziehschräge α im Bereich von 2 - 6 °, vorzugsweise 2 - 5 ° auf.

In einem besonders bevorzugten Ausführungsbeispiel ist die Wanne einteilig ausgebildet und weist einen unteren Radius Ru im Bereich von 5 -15 mm, vorzugsweise 5 - 12 mm, einen oberen Radius Ro im Bereich von 4 - 12 mm, vorzugsweise 4 - 10 mm und eine Ziehschräge α im Bereich von 2 - 6 °, vorzugsweise 2 - 5 ° auf.

Mit dem Radius Ru wird im Sinne der vorliegenden Erfindung der Radius zwischen einem Bodenblech und einer Außenwand, mit dem Radius Ro der Radius zwischen der Außenwand und dem Flansch des Batterieaufnahmeraums verstanden.

Alterativ ist die Wanne vorzugsweise aus mindestens 4 Rahmenprofilen und einem Bodenblech ausgebildet. Diese Bauform bietet eine bessere Bauraumausnutzung, da die Ecken keinen oder einen nur sehr geringen Radius aufweisen.

Vorzugsweise werden die Rahmenprofile miteinander verschweißt. Durch den Einsatz eines Q&P Stahls werden artgleiche oder nahezu artgleiche Fügeverbindungen ermöglicht. Artgleiche Fügeverbindungen lassen sich meist besonders prozesssicher herstellen, was den Prüfaufwand und Nacharbeit zur Gewährleistung der Dichtigkeit reduziert.

Gemäß einer weiteren bevorzugten Variante weist das Batteriegehäuse weiterhin ein Unterfahrschutzblech auf ausgebildet aus dem ersten oder zweiten Stahlflachprodukt.

Das Unterfahrschutzblech ist unter der Wanne angeordnet und vorzugsweise mit dem Gehäuserahmen lösbar befestigt. Das Unterfahrschutzblech schützt die Batteriezellen vor von unten auftreffende Crashbeanspruchungen. Dabei gibt es unterschiedliche Beanspruchungsprofile: Stumpfe, großflächige Gegenstände oder kleine Spitze Gegenstände, welche unterschiedliche Anforderungen an den Werkstoff stellen. Da das Unterfahrschutzblech stark korrosiv belastet wird ist dieses vorzugsweise mit einem kathodischen Korrosionsschutz beschichtet. Der kathodische Korrosionsschutz ist hierbei ausgewählt aus der Gruppe feuerverzinkt, elektrolytisch verzinkt, Galvannealed, Zink-Magnesium, Zink-Aluminium.

In einer anderen bevorzugten Variante weist der Batterieaufnahmeraum innerhalb und/oder außerhalb angeordnete Längs-und/oder Querträger auf, die aus dem zweiten Stahlflachprodukt ausgebildet sind.

Vorzugsweise können innerhalb der Wanne und/oder zwischen der Wann und dem Unterfahrschutz Längs- und/oder Querträger angeordnet sein. Diese haben eine profilartige Geometrie mit vorzugsweise hutförmigem oder rechteckförmigem Querschnitt. Am Anschluss zur Wanne kann es vorteilhaft sein, Flansche abzustellen. Die Längs- und Querträger haben einen entscheidenden Beitrag um Crashlasten von der Seite und von unten abzustützen.

Der Deckel übernimmt wenig Crashfunktion und kann auch einem gut umformbaren Tiefziehstahl oder einen Stahl-Kunststoff Sandwichwerkstoff gefertigt sein. Denkbar ist auch Aluminium, Stahl-Kunststoff Sandwichwerkstoff oder Kunststoff.

Gemäß einem anderen Aspekt betrifft die vorliegende Erfindung ein elektrisch angetriebenes Fahrzeug, insbesondere Kraftfahrzeug, aufweisend ein erfindungsgemäßes Batteriegehäuse.

### Kurze Beschreibung der Zeichnungen

Im Folgenden wird die Erfindung anhand von Zeichnungen näher erläutert. Im Einzelnen zeigen:
- Fig. 1: eine Schnittansicht eines Batteriegehäuses gemäß einer ersten Ausführungsform der Erfindung,
- Fig. 2: eine Draufsicht des Batteriegehäuses gemäß der ersten Ausführungsform der Erfindung,
- Fig. 3: einen Ausschnitt eines Batterieaufnahmeraums gemäß der ersten Ausführungsform der Erfindung, und
- Fig. 4: eine Schnittansicht eines Batteriegehäuses gemäß einer zweiten Ausführungsform der Erfindung.

### Beschreibung der bevorzugten Ausführungsformen

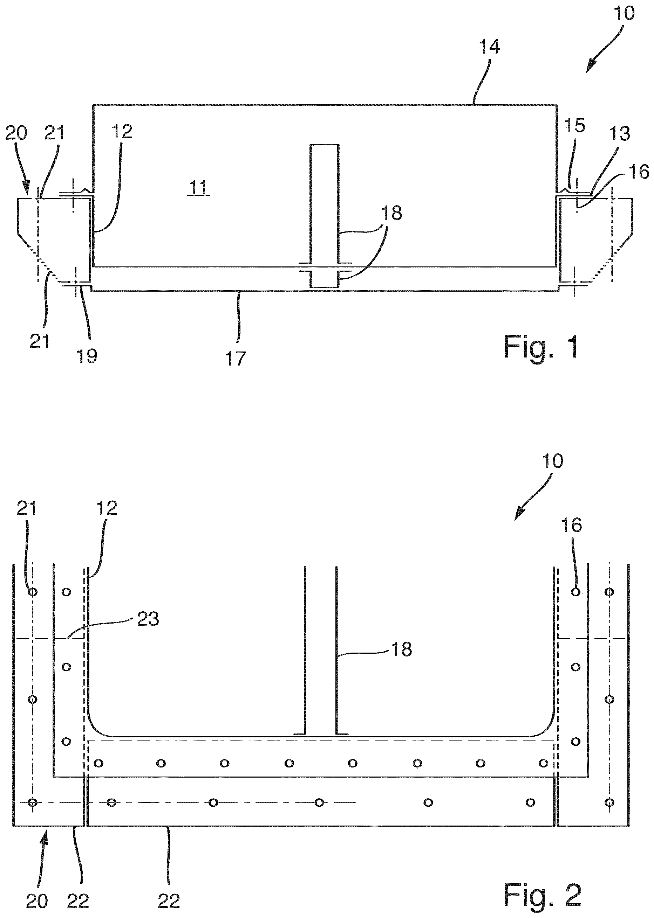

In Fig. 1 ist eine Schnittansicht eines Batteriegehäuses 10 gemäß einer ersten Ausführungsform der vorliegenden Erfindung gezeigt. Das Batteriegehäuse 10, welches für ein elektrisch angetriebenes Fahrzeug (nicht gezeigt), insbesondere ein elektrisch angetriebenes Kraftfahrzeug (E-Auto) vorgesehen ist weist einen Batterieaufnahmeraum 11 in Form einer einteilig ausgebildeten Wanne 12 auf. Die Wanne 12 weist einen umlaufenden Flansch 13 auf, über den die Wanne mit einem Gehäuserahmen 20 verbunden ist. Der Gehäuserahmen 20 verläuft entlang des Randes des Batteriegehäuses 10 und weist einen fünfeckigen Querschnitt auf. Mit dem Gehäuserahmen 20 kann das Batteriegehäuse 10 mit der Karosserie des Fahrzeugs (nicht gezeigt) verbunden werden. Hierzu weist der Gehäuserahmen 20 mehrere Öffnungen 21 auf, über die er an der Karosserie verschraubt werden kann. Ferner weist das Batteriegehäuse einen Deckel 14 auf, mit dem die Wanne 12 verschlossen werden kann. Der Deckel 12 weist ebenfalls einen umlaufenden Flansch 15 auf. Über miteinander korrespondierende Öffnungen 16 in dem jeweiligen Flansch 13, 15 und im Gehäuserahmen 20 kann die Wanne 12 mit dem Deckel 14 am Gehäuserahmen mittels einer Verschraubung verbunden werden. Weiterhin weist das Batteriegehäuse 10 ein Unterfahrschutzblech 17 auf, das unter der Wanne 12 angeordnet und mit dem Gehäuserahmen 20 über einen Flansch 19 lösbar, beispielsweise mittels einer Verschraubung befestigt ist. Das Unterfahrschutzblech 17 schützt die Batteriezellen 30 vor von unten auftreffenden Aufprallbeanspruchungen. Innerhalb und außerhalb, d.h. zwischen Wanne 12 und Unterfahrschutzblech 17, des Batterieaufnahmeraums 11 sind Längs- und Querträger 18 angeordnet, die im Batteriegehäuse 10 für eine zusätzliche Steifigkeit sorgen. Die Längs- und Querträger 18 können eine profilartige Geometrie mit vorzugsweise hutförmigem oder rechteckförmigem Querschnitt aufweisen. Auch kann es am Anschluss zur Wanne vorteilhaft sein, Flansche abzustellen.

Fig. 2 zeigt eine Draufsicht des Batteriegehäuses 10, aus der der Aufbau des Gehäuserahmens 20 näher erkennbar ist. Der Gehäuserahmen 20 besteht aus vier einzelnen Profilelementen 22, die an den jeweiligen Ecken auf Stoß miteinander verschweißt sind. Ferner weist der Gehäuserahmen 20 innen angeordnete Verstärkungselemente 23 auf, die als innen angeordnete Schottbleche, Hutprofile oder mäanderförmige Profile ausgebildet sein können.

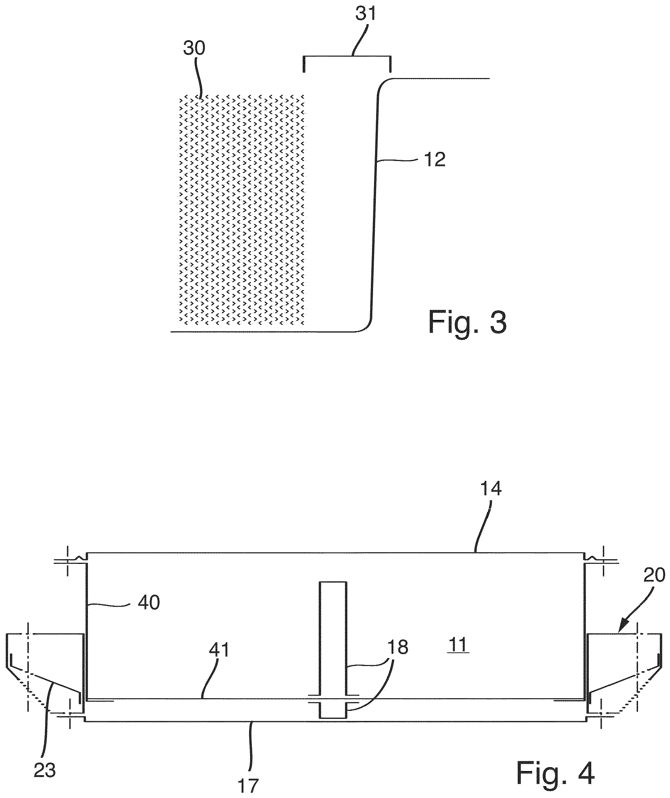

Fig. 3 zeigt einen Ausschnitt des Batterieaufnahmeraums 11 mit einem Deformationsbereich 31, der durch den Abstand zwischen der Batteriezelle 30 und der Außenwand der Wanne 12 gebildet wird. Vorzugsweise ist der Radius Rᵤ, d.h. der Radius zwischen dem Bodenblech der Wanne 12 und der Außenwand, im Bereich von 5 - 15 mm, der Radius Rₒ, d.h. der Radius zwischen der Außenwand und dem Flansch 15, im Bereich von 4 -12 mm. Die Außenwand der Wanne 12 weist vorzugsweise eine Ziehschräge α im Bereich von 2 - 6 ° auf.

Mit dem Radius Ru wird im Sinne der vorliegenden Erfindung der Radius zwischen einem Bodenblech und einer Seitenwand, mit dem Radius Rₒ der Radius zwischen der Seitenwand und dem Flansch des Batterieaufnahmeraums verstanden.

Fig. 4 zeigt eine Schnittansicht eines Batteriegehäuses gemäß einer zweiten Ausführungsform. Im Unterschied zu der Ausführungsform gemäß den Figuren 1 bis 3 ist der Batterieaufnahmeraum 11 aus 4 Rahmenprofilen 40 und einem Bodenblech 41 ausgebildet. Diese Bauform bietet eine bessere Bauraumausnutzung, da die Ecken keinen oder einen nur sehr geringen Radius aufweisen.

Der Deckel übernimmt wenig Crashfunktion und kann auch einem gut umformbaren Tiefziehstahl oder einen Stahl-Kunststoff Sandwichwerkstoff gefertigt sein. Denkbar ist auch Aluminium, Stahl-Kunststoff Sandwichwerkstoff oder Kunststoff.

### Bezugszeichenliste

- 10: Batteriegehäuse
- 11: Batterieaufnahmeraum
- 12: Wanne
- 13: Flansch
- 14: Deckel
- 15: Flansch
- 16: Öffnungen
- 17: Unterfahrschutzblech
- 18: Längs- und Querträger
- 19: Flansch
- 20: Gehäuserahmen
- 21: Öffnungen
- 22: Profilelement
- 23: Verstärkungselemente
- 30: Batteriezellen
- 31: Deformationsbereich
- 40: Rahmenprofil
- 41: Bodenblech

## Patentansprüche

1. Batteriegehäuse (10) für ein elektrisch angetriebenes Fahrzeug, insbesondere ein Kraftfahrzeug, aufweisend:
- einen Batterieaufnahmeraum (11) aus einem ersten Stahlflachprodukt, wobei der Batterieaufnahmeraum (11) in Form einer Wanne (12) mit umlaufendem Flansch (13) ausgebildet ist, und
- einen Gehäuserahmen (20) aus einem zweiten Stahlflachprodukt, wobei beide Stahlflachprodukte sich in mindestens einer der Eigenschaften Dehngrenze, R_{p0,2}, Zugfestigkeit, R_{M}, oder Dehnung, A₅₀, unterscheiden,
**dadurch gekennzeichnet, dass**
wobei das erste Stahlflachprodukt eine Dehngrenze von mindestens 650 MPa, eine Zugfestigkeit von mindestens 1250 MPa und/oder eine Dehnung von mindestens 18 % und das zweite Stahlflachprodukt eine Dehngrenze von mindestens 1000 MPa, eine Zugfestigkeit von mindestens 1400 MPa und/oder eine Dehnung von mindestens 12 % aufweist, wobei beide Stahlflachprodukte aus einem Stahl bestehen, der neben Eisen und unvermeidbaren Verunreinigungen, in Gew.-%,
C: 0,1 bis 0,35,
Si: 0,5 bis 1,8,
Mn: 1,4 bis 3,2,
Al: bis zu 1,0,
P: bis zu 0,015,
S: bis zu 0,0025,
N: bis zu 0,0075,
sowie optional 1 bis 4 Elemente ausgewählt aus der Gruppe "Mo, V, Ti und/oder Nb, B und Cr" in folgenden Gehalten
Cr: 0,1 bis 0,5,
Mo: 0,05 bis 0,25,
V: 0,05 bis 0,15,
B: 0,0005 bis 0,005,
Ti und/oder Nb: 0,005 bis 0,135,
enthält, und ein Gefüge mit, in Flächen-%, weniger als 30 % Ferrit, weniger als 10 % Bainit, 5 - 70 % unangelassenem Martensit, 5 - 30 % Restaustenit und 25 - 80 % angelassenem Martensit aufweist, wobei mindestens 99 % der im angelassenen Martensit enthaltenen Eisenkarbide eine Größe von weniger als 500 nm aufweisen.

2. Batteriegehäuse nach Anspruch 1, wobei die Wanne (12) einteilig ausgebildet ist und einen Radius Rᵤ im Bereich von 5 -15 mm, und/oder einen Radius Rₒ im Bereich von 4 - 12 mm und/oder eine Ziehschräge α im Bereich von 6 - 8 ° aufweist.

3. Batteriegehäuse nach Anspruch 1, wobei die Wanne (12) aus mindestens 4 Rahmenprofilen (40) und einem Bodenblech (41) ausgebildet ist.

4. Batteriegehäuse nach einem der vorhergehenden Ansprüche 1 bis 3, weiterhin aufweisend ein Unterfahrschutzblech (17) ausgebildet aus dem ersten oder zweiten Stahlflachprodukt.

5. Batteriegehäuse nach einem der vorhergehenden Ansprüche 1 bis 4, wobei der Batterieaufnahmeraum (11) innerhalb und/oder außerhalb angeordnete Längs- und/oder Querträger (18) aufweist, die aus dem zweiten Stahlflachprodukt ausgebildet sind.

6. Batteriegehäuse nach einem der vorhergehenden Ansprüche 1 bis 5, weiterhin aufweisend einen Deckel (14).

7. Batteriegehäuse nach einem der vorhergehenden Ansprüche 1 bis 6, wobei der Gehäuserahmen (20) aus mindestens 4 Profilelementen (22) ausgebildet ist.

8. Batteriegehäuse nach Anspruch 7, wobei die Profilelemente (22) innen angeordnete Verstärkungselemente (23) aufweisen.

9. Elektrisch angetriebenes Fahrzeug, insbesondere Kraftfahrzeug, aufweisend ein Batteriegehäuse (10) nach einem der Ansprüche 1 bis 8.

## Claims

1. Battery housing (10) for an electrically powered vehicle, in particular a motor vehicle, comprising:
- a battery accommodation space (11) made of a first flat steel product, where the battery accommodation space (11) is configured in the form of a trough (12) having a circumferential flange (13), and
- a housing frame (20) made of a second flat steel product, where the two flat steel products differ in terms of at least one of the properties yield strength, R_{p0.2}, tensile strength, R_{M}, or elongation, A₅₀,
**characterized in that** wherein the first flat steel product has a yield strength of at least 650 MPa, a tensile strength of at least 1250 MPa and/or an elongation of at least 18% and the second flat steel product has a yield strength of at least 1000 MPa, a tensile strength of at least 1400 MPa and/or an elongation of at least 12%, where both flat steel products consist of a steel containing, in addition to iron and unavoidable impurities, in % by weight,
C: from 0.1 to 0.35,
Si: from 0.5 to 1.8,
Mn: from 1.4 to 3.2,
Al: up to 1.0,
P: up to 0.015,
S: up to 0.0025,
N: up to 0.0075,
and optionally from 1 to 4 elements selected from the group consisting of "Mo, V, Ti and/or Nb, B and Cr" in the following contents:
Cr: from 0.1 to 0.5,
Mo: from 0.05 to 0.25,
V: from 0.05 to 0.15,
B: from 0.0005 to 0.005,
Ti and/or Nb: from 0.005 to 0.135,
and has a microstructure comprising, in % by area, less than 30% of ferrite, less than 10% of bainite, 5-70% of unannealed martensite, 5-30% of residual austenite and 25-80% of annealed martensite, where at least 99% of the iron carbides present in the annealed martensite have a size of less than 500 nm.

2. Battery housing according to Claim 1, wherein the trough (12) is made in one piece and has a radius Rᵤ in the range 5-15 mm, and/or a radius Rₒ in the range 4-12 mm and/or a drawing angle α in the range 6-8°.

3. Battery housing according to Claim 1, wherein the trough (12) is made up of at least 4 frame profiles (40) and a bottom plate (41).

4. Battery housing according to any of the preceding Claims 1 to 5 which further comprises an underride guard plate (17) made of the first or second flat steel product.

5. Battery housing according to any of the preceding Claims 1 to 4, wherein the battery accommodation space (11) has longitudinal and/or transverse bearers (18) which are arranged inside and/or outside and are made of the second flat steel product.

6. Battery housing according to any of the preceding Claims 1 to 5 which further comprises a lid (14).

7. Battery housing according to any of the preceding Claims 1 to 6, wherein the housing frame (20) is made up of at least 4 profile elements (22).

8. Battery housing according to Claim 7, wherein the profile elements (22) have reinforcing elements (23) arranged inside.

9. Electrically powered vehicle, in particular motor vehicle, comprising a battery housing (10) according to any of Claims 1 to 8.

## Revendications

1. Boîtier de batterie (10) destiné à un véhicule électrique, notamment automobile, ledit boîtier de batterie comportant :
- un espace de réception de batterie (11) formé à partir d'un premier produit plat en acier, l'espace de réception de batterie (11) étant conçu sous la forme d'une auge (12) pourvue d'une bride circonférentielle (13), et
- un cadre de boîtier (20) formé à partir d'un deuxième produit plat en acier, les deux produits plats en acier se différenciant par au moins une des propriétés suivantes : limite d'élasticité R_{p0,2}, résistance à la traction R_{M}, ou allongement A₅₀,
**caractérisé en ce que** le premier produit plat en acier ayant une limite d'élasticité d'au moins 650 MPa, une résistance à la traction d'au moins 1250 MPa et/ou un allongement d'au moins 18 % et le deuxième produit plat en acier ayant une limite d'élasticité d'au moins 1000 MPa, une résistance à la traction d'au moins 1400 MPa et/ou un allongement d'au moins 12 %, les deux produits plats en acier étant en un acier qui contient en % en poids, en plus du fer et des impuretés inévitables,
C : 0,1 à 0,35,
Si : 0,5 à 1,8,
Mn : 1,4 à 3,2,
Al : jusqu'à 1,0,
P : jusqu'à 0,015,
S : jusqu'à 0,0025,
N : jusqu'à 0,0075,
et éventuellement 1 à 4 éléments sélectionnés dans le groupe comprenant Mo, V, Ti et/ou Nb, B et Cr dans les teneurs suivantes
Cr : 0,1 à 0,5,
Mo: 0,05 à 0,25,
V :0,05 à 0,15,
B : 0,0005 à 0,005,
Ti et/ou Nb : 0,005 à 0,135,
et qui présente une structure comprenant, en % de surface, moins de 30 % de ferrite, moins de 10 % de bainite, 5 à 70 % de martensite non trempée, 5 à 30 % d'austénite résiduelle et 25 à 80 % de martensite trempée, au moins 99 % des carbures de fer contenus dans la martensite trempée ayant une taille inférieure à 500 nm.

2. Boîtier de batterie selon la revendication 1, l'auge (12) étant conçue d'une seule pièce et ayant un rayon Rᵤ dans la gamme de 5 à 15 mm, et/ou un rayon Rₒ dans la gamme de 4 à 12 mm et/ou une inclinaison d'extraction α dans la gamme de 6 à 8°.

3. Boîtier de batterie selon la revendication 1, l'auge (12) étant conçue à partir d'au moins 4 profilés de cadre (40) et d'une tôle de fond (41).

4. Boîtier de batterie selon l'une des revendications précédentes 1 à 3, comportant en outre une tôle anti-encastrement (17) conçue à partir du premier ou du deuxième produit plat en acier.

5. Boîtier de batterie selon l'une des revendications précédentes 1 à 4, l'espace de réception de batterie (11) comportant des longerons et/ou des traverses (18) qui ont disposés à l'intérieur et/ou à l'extérieur et qui sont conçus à partir du deuxième produit plat en acier.

6. Boîtier de batterie selon l'une des revendications précédentes 1 à 5, comportant en outre un couvercle (14).

7. Boîtier de batterie selon l'une des revendications précédentes 1 à 6, le cadre de boîtier (20) étant conçu à partir d'au moins 4 éléments profilés (22).

8. Boîtier de batterie selon la revendication 7, les éléments profilés (22) comportant des éléments de renforcement (23) disposés à l'intérieur.

9. Véhicule électrique, en particulier véhicule automobile, comportant un boîtier de batterie (10) selon l'une des revendications 1 à 8.
